# EUROPEAN PATENT APPLICATION

(11) **EP 3 190 003 A1**
(43) Date of publication of application: **12.07.2017**
(21) Application number: 16207043.7
(22) Date of filing: 28.12.2016
(51) Int. Cl.: B60P 7/12, B61D 45/00

(54) **CYLINDRICAL LOAD-CARRYING ASSEMBLY**

(30) Priority: 29.12.2015 TR 201517365
(71) Applicant: Tirsan Treyler Sanayi Ve Ticaret Anonim Sirketi, 54580 Sakarya (TR)
(72) Inventor: YILMAZ, TUGAY, SAKARYA (TR); AKINCI, VOLKAN, SAKARYA (TR)
(74) Representative: Dereligil, Ersin

(57) **Abstract**

The invention is related to a cylindrical load-carrying assembly that enables carrying of bigger cylinders during cylindrical load (5) transports and increases the security of this cylindrical load (5).

## Description

### Technical Field

The invention is related to a cylindrical load-carrying assembly that enables carrying of bigger cylinders during cylindrical load (5) transports and increases the security of this cylindrical load (5).

### Known State of the Technique

At the present time, commercial vehicles accommodate roller chambers that are specifically designed to carry loads with cylindrical geometry. When these chambers are not in use, standard loads are carried by obtaining a flat surface by means of a cover placed on them.

Transportation of sheet metals and similar materials in rolls requires a special set of safety measures due to both form and weight of the material. In order to transport cylindrical loads with commercial vehicles, transportation chambers, which must be present within the vehicle, should comply with manufacturer's standards and geometries defined in Section 19 of VDI (Association of German Engineers) 2700. These standards under Section 19 of VDI 2700 are as follows:
"A. Vehicles that are intended to transport sheet metal rolls must incorporate a roller chamber allowing for safe placement and fixation of rolls between spars of frame;
B. Roller chamber must be in the form of conic section which is reverse to 35 degree angle with opposite side walls;
C. Longitudinal axis of roller chamber must be placed in parallel to length axis of vehicle and at equal distances to both sides of vehicle;
D. When axis of cylinder is placed throughout the roller axis, there must be no space between cylindrical surfaces of roller and side walls of roller chamber;
E. Moreover, roller chambers must accommodate stopper posts in order to inhibit forward and backward movement of roll during sudden braking and acceleration."

Current disadvantages of this use in commercial vehicles are stated below:
- Covers should be high-strength in order to be used in transport of standard loads, and these designs which are structurally strong may increase the cover weight. Cover weight is an ergonomically important parameter since it can only be lifted via manual strength by the operator of the vehicle.
- When the covers are not in use, they are kept by being stacked in another part of the vehicle and they need to be fixed during transportation.
- In order to ensure load security during transport of cylindrical loads, both sides of rolls are reinforced with wedges.

In consequence of technical researches, the patents below regarding this subject are present in the literature:
- EP2792617- European Patent Application titled "Holder and arrangement for holding a coil during transport",
- CN202669816 - Chinese Utility Model Application titled "Wire coil transport vehicle",
- US2004009050 - American Patent Application titled "Trailer for securing and hauling steel coils",
- US2012076606 - American Patent Application titled "Coil support and transport system and method".

These patent and utility model applications above consist of different methods and elements concerning transportation of cylindrical loads. However, these applications does not mention a re-adjustable modular system when cylindrical load does not exist, and incorporates a metal safety belts only in roller chamber or that surrounds cylindrical load in order to fasten the cylindrical load up in the vehicle. It is seen that these methods are not systems which provide ease of use and have modular structures.

Consequently, a development in the related technical field was necessitated due to unfavorable situations mentioned above and insufficiency of the existing solutions on the subject.

### Intention of the Invention

The invention was created by being inspired by the current situations and aims to solve the problems above.

Another purpose of the invention is to present a cylindrical load-carrying assembly which is foldable, modular, and lighter and handier than the existing covers due to its simple design, but has structural strength at the same level.

Another purpose of the invention is to present a structure that allows for a flat surface, like in the existing situations, when cylindrical load-carrying assembly in our invention is not in use.

Another purpose of the invention is to present an assembly that inhibits rollover and displacement of cylindrical load due to shaking while the vehicle moves, by means of a cover fixing area, and ensures security of the cylindrical load.

Another purpose of the invention is to present an assembly that is affordable and suitable to all vehicles used in transportation of cylindrical loads.

Structural and characteristic features and all advantages of the invention will be understood more clearly through the figures provided below and by references made to these figures; and therefore, it is required to make evaluations by considering these figures and detailed explanations.

### Figures that will Facilitate Understanding the Invention

**Figure-1** is front section view of cylindrical load-carrying assembly in our invention.
**Figure-2** is perspective view of cylindrical load-carrying assembly in our invention.
**Figure-3** shows the location of cylindrical load-carrying assembly in our invention when cylindrical load is not transported.
**Figure-4** is section view of the location of cylindrical load-carrying assembly in our invention when cylindrical load is not transported.
**Figure-5** shows the location of assembly in the current technique when cylindrical load is not transported.
**Figure-6** shows the location of assembly in the current technique when cylindrical load is transported.

The drawings do not have to be scaled necessarily and unnecessary details may be neglected to understand the current invention. Besides, elements which are largely identical or at least with largely identical functions are shown with the same number.

### Explanation of Part References

- 1.: Vehicle Body
- 2.: Roller Chamber
- 3.: Cover of Roller Chamber
3.1 First Rotation Axis
3.2 Second Rotation Axis
- 4.: Cover Fixation Area
- 5.: Cylindrical Load

### Detailed Explanation of the Invention

In this detailed explanation, preferred structures of the invention are explained only for better understanding of the subject and in a way not creating any limiting impact.

The invention is a cylindrical load-carrying assembly that enables carrying of bigger cylinders during cylindrical load (5) transports and increases the security of this cylindrical load (5), and it comprises:
- At least one cover of roller chamber (3) that is attached on the edge where vehicle body (1) and roller chamber (2) intersect, and limits movement of cylindrical load (5) in the vehicle by supporting it,
- At least one first rotation axis (3.1) and one second rotation axis (3.2) that are formed on the cover of roller chamber (3) and enable folding of this cover of roller chamber (3).

The cylindrical load-carrying assembly in our invention consists of a roller chamber (2) that is formed on the vehicle body (1), is at equal height with this vehicle body and bears the cylindrical load (5); a cover of roller chamber (3) that ensures safe transportation of the cylindrical load (5), which is placed in this roller chamber (2), by enabling its fixation; a first rotation axis (3.1) and a second rotation axis (3.2) that are formed on this cover of roller chamber (3) and enable it to take a form suitable to the cylindrical load (5); and at least one cover fixation area (4) that is placed on vehicle body (1) and enables fixation of cover of roller chamber (3).

The cylindrical load-carrying assembly is used in two different ways:
A. During transportation of cylindrical load (5): Cover of roller chamber (3) is first rotated from the first rotation axis (3.1) and then from the second rotation axis (3.2). After, it is interlocked with cover fixation area (4). In consequence of this process, a transportation area is created on vehicle body (1) for the cylindrical load (5) (See Figure-1, Figure-2).
B. In cases when cylindrical load (5) is not transported: Cover of roller chamber (3) is first removed from cover fixation area (4) where it was interlocked, then rotated from the first rotation axis (3.1) firstly and from the second rotation axis (3.2) secondly. After, it is located on roller chamber (2). This way, a surface is obtained which is in the same plane with vehicle body (1) (See. Figure-3).

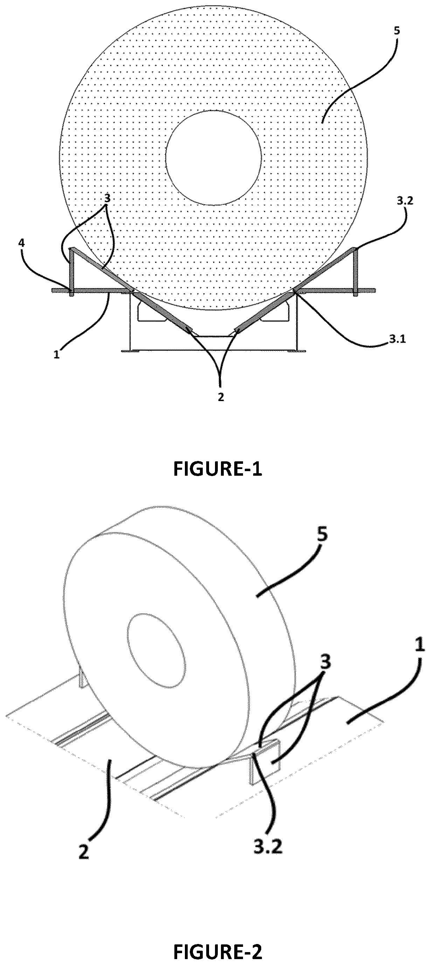

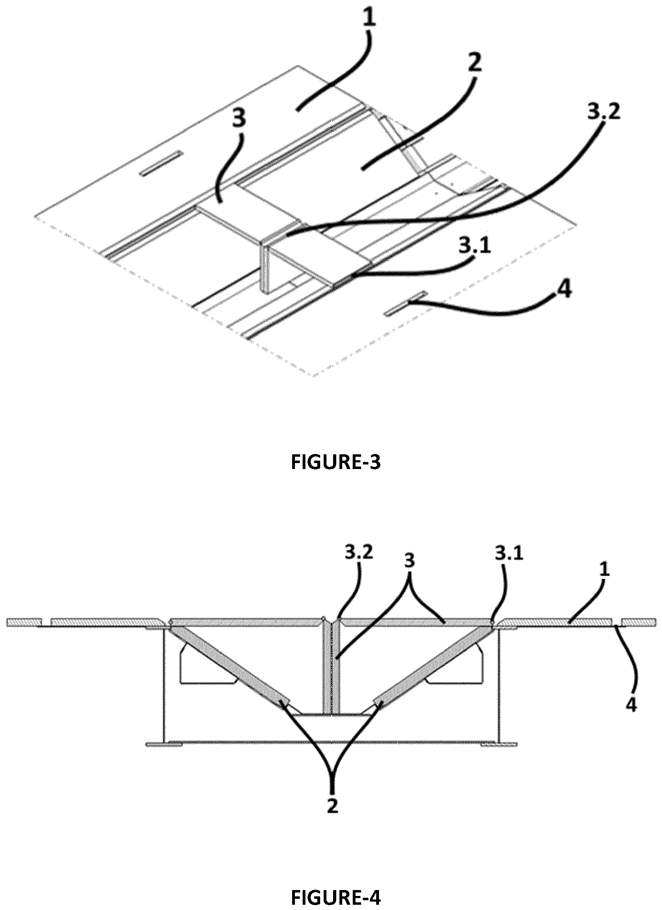

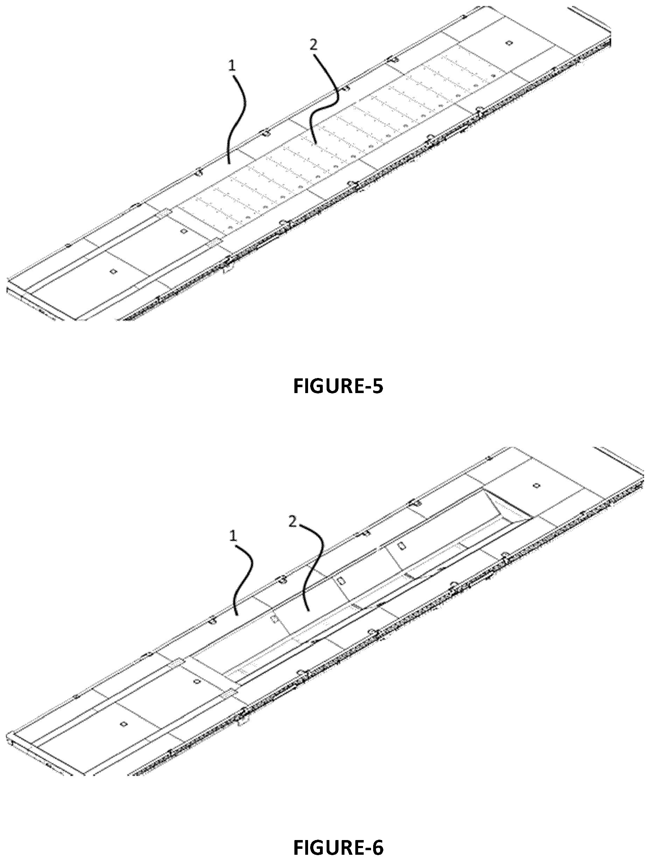

## Claims

1. It is a cylindrical load-carrying assembly that enables carrying of bigger cylinders during cylindrical load (5) transports and increases the security of this cylindrical load (5), and **it comprises:**
• At least one cover of roller chamber (3) that is attached on the edge where vehicle body (1) and roller chamber (2) intersect, and limits the movement of cylindrical load (5) in the vehicle by supporting it,
• At least one first rotation axis (3.1) and one second rotation axis (3.2) that are formed on the cover of roller chamber (3) and enable folding of this cover of roller chamber (3).

2. It is a cylindrical load-carrying assembly in accordance with Claim 1, and **it comprises:**
• At least one cover fixation area (4) that is placed on vehicle body (1) and enables fixation of cover of roller chamber (3).
